# FASCICULE DE BREVET EUROPEEN

(11) **EP 3 803 189 B1**
(45) Date de publication et mention de la délivrance du brevet: **17.04.2024**
(21) Numéro de dépôt: 19732718.2
(22) Date de dépôt: 13.05.2019
(51) Int. Cl.: F17C 5/06

(54) **DISPOSITIF ET PROCÉDÉ DE REMPLISSAGE DE RÉSERVOIR(S) DE GAZ SOUS PRESSION**
VORRICHTUNG UND VERFAHREN ZUM BEFÜLLEN EINES ODER MEHRERER TANKS MIT DRUCKGAS
DEVICE AND METHOD FOR FILLING A TANK OR TANKS WITH PRESSURISED GAS

(30) Priorité: 07.06.2018 FR 1854953
(43) Date de publication de la demande: 14.04.2021
(73) Titulaire: L'Air Liquide, Société Anonyme pour l'Etude et l'Exploitation des Procédés Georges Claude, 75007 Paris (FR)
(72) Inventeur: FRANCOIS, Thibaut, 38120 FONTANIL CORNILLON (FR)
(74) Mandataire: Air Liquide
(86) Numéro de dépôt international: PCT/FR2019/051066
(87) Numéro de publication internationale: WO 2019/234321

(56) Documents cités:
- EP-A1- 2 728 243
- EP-A1- 3 270 033
- DE-A1-102009 037 886
- FR-A1- 3 042 254
- US-A1- 2015 090 364

## Description

L'invention concerne un dispositif et un procédé de remplissage de réservoir(s) de gaz sous pression.

L'invention concerne plus particulièrement un dispositif de remplissage de réservoir(s) de gaz sous pression, notamment d'hydrogène, comprenant un circuit comprenant une pluralité d'extrémités amont raccordées respectivement à des sources de gaz sous pression distinctes, le circuit comprenant en outre au moins un compresseur, au moins un stockage tampon, un ensemble de vannes pilotées et au moins une extrémité aval destinée à être raccordée au réservoir(s) à remplir, le dispositif comprenant en outre un organe de commande électronique de stockage et de traitement relié à l'ensemble de vanne et au compresseur(s), l'organe de commande étant configuré pour commander les vannes et/ou le compresseur pour assurer un transfert de gaz dans le réservoir à partir d'au moins une source et/ou d'au moins un stockage tampon par équilibrage de pression et/ou via le compresseur, le dispositif comprenant un ensemble de capteurs de mesure de la pression au sein des sources et des stockages tampon, l'organe de commande comprenant un organe de réception ou de génération d'un signal représentatif de la demande de remplissage parmi au moins deux niveaux distincts de demande de remplissage : une demande relativement haute et une demande relativement basse, l'organe de commande étant configuré pour assurer le transfert de gaz dans le réservoir selon au moins un premier mode de transfert utilisant la source ayant la pression la plus élevée et un second mode de transfert utilisant une source ayant une pression inférieure à cette pression la plus élevée, l'organe de commande étant configuré pour remplir le au moins un réservoir selon le premier mode de transfert en réponse à la réception ou la génération d'un signal d'une demande de remplissage relativement haute et pour remplir le au moins un réservoir selon le second mode de transfert en réponse à la réception ou la génération d'un signal d'une demande de remplissage relativement basse.

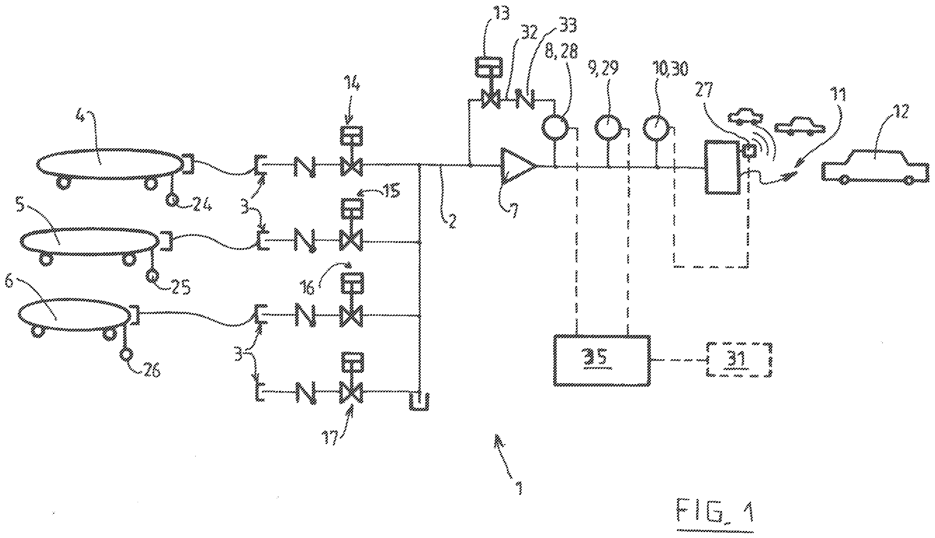

Le stations de remplissages de réservoirs d'hydrogène gazeux comprennent généralement (cf. figure 1)
- des sources 4, 5, 6 de gaz, notamment à volumes fixes et à pressions variables en fonction de leur utilisation,
- un ou des compresseurs 7 (notamment volumétriques qui ont une performance liée à la pression d'aspiration ou pression source. Lorsque la pression source s'élève, : soit le débit est plus élevé, soit la consommation électrique est plus faible. Ceci est dépendant de l'utilisation faite du compresseur dans son processus),
- un ou des stockages 8, 9, 10 tampon (par exemple haute pression, moyen pression et basse pression),
- un module/organe 35 électronique de commande et de distribution pour remplir un réservoir ou un véhicule ou une capacité à partir d'une source et/ou d'un stockage tampon et/ou du compresseur.

Le document US20150090364A1 décrit une station contrôlant le choix de la source de gaz en fonction des conditions de pression.

Cf. également le document US20100193070A qui décrit différents modes de remplissages.

L'utilisation de ces stations peut poser certains problèmes lorsque l'activité est variable.

Par exemple, pour le cas de réservoirs de véhicules, pendant journée, la demande est rarement constante. Il y a ainsi des pics de demande pour remplir des réservoirs. La station peut être dimensionnée pour absorber ces pics avec un compresseur ayant un plus grand débit et/ou des stockages plus volumineux. Mais, la station se retrouve ainsi surdimensionnée pour le reste de la journée et est donc plus coûteuse à l'achat et à l'opération.

De plus, les performances de la station dépendent du compresseur 7. Les performances du compresseur 7 dépendent de la pression source qui l'alimente. Pour être sûr de suffisamment dimensionner la station 1, le compresseur 7 doit pouvoir fournir le plus gros débit (lors de demande de pics) avec la pression la plus basse disponible (pression minimale). Ainsi, la station 1 et notamment le compresseur 7 sont généralement surdimensionnés le reste du temps lorsque la source de gaz est à une pression plus élevée que la pression minimale. Le raisonnement est le même pour les stockages tampon (basse pression par exemple entre 100 et 300 bar, moyenne pression par exemple entre 400 et 550 bar et haute pression par exemple entre 850 et 1200 bar).

Ainsi, il est souhaitable de diminuer les coûts d'achat de la station en limitant le dimensionnement des éléments constitutifs (compresseurs et/ou stockage tampon).

De même, un objectif constant est de limiter la consommation électrique de la station.

Enfin, il est avantageux de limiter l'usure du compresseur.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus est essentiellement caractérisée en ce que l'organe de réception ou de génération d'un signal représentatif de la demande de remplissage comprenant un agenda et une horloge électroniques, l'organe de commande stockant un calendrier prédéfini définissant des périodes de demande relativement haute ou relativement basse en fonction du jour et de l'heure définis par l'agenda et l'horloge, et en ce que le calendrier prédéfini est mis à jour et le cas échéant modifié en fonction des données réelles de demande de remplissage en terme de quantité et de dates et heures, c'est-à-dire que le calendrier est éventuellement modifié de façon itérative et prédictive en fonction des données passées enregistrées, et/ou le calendrier prédéfini est mis à jour en fonction de données externes parmi : une information de météo (ensoleillé/pluvieux), la température atmosphérique.

Par ailleurs, des modes de réalisation de l'invention peuvent comporter l'une ou plusieurs des caractéristiques suivantes :
- le calendrier prédéfini est mis à jour et le cas échéant modifié en fonction des données réelles de demande de remplissage en terme de quantité et de dates et heures, c'est-à-dire que le calendrier est éventuellement modifié de façon itérative et prédictive en fonction des données passées enregistrées,
- l'organe de réception ou de génération d'un signal représentatif de la demande de remplissage comprend un récepteur sans fil ou filaire configuré pour recevoir un signal de commutation du mode de transfert de gaz dans le premier mode de transfert ou dans le second mode de transfert,
- dans le premier mode de transfert le transfert de gaz utilise une ou des sources de gaz ayant la pression la plus élevée et comprise entre 400 et 800bar tandis que dans le second mode de transfert utilise ou des sources de gaz ayant une pression inférieure à cette pression la plus élevée et comprise entre 50 et 400 bar,

- le compresseur est du type électrique, lors du second mode de transfert la puissance électrique du compresseur étant comprise entre 80% et 25% et de préférence entre 30 et 60% de la puissance électrique du compresseur lors du premier mode,
- le compresseur est du type à rotation ou à translation d'un élément de compression à une vitesse déterminée, lors du second mode de transfert la vitesse de l'élément de compression du compresseur étant comprise entre 80% et 25% et de préférence entre 30 et 60% de la vitesse de l'élément de compression lors du premier mode de transfert,
- selon le second mode de transfert, les remplissages successifs de plusieurs réservoirs nécessitent un nombre d'arrêts et de redémarrages de compresseur qui est réduit par rapport au nombres d'arrêts et de redémarrages nécessaires pour remplir le même nombre de réservoirs selon le premier mode de transfert,
- chaque source comprend au moins l'un parmi : un réservoir de gaz sous pression, tout ou partie d'un ensemble de réservoirs de gaz sous pression sur des remorques, un réservoir de gaz liquéfié associé à un vaporiseur, un réseau de gaz sous pression,

L'invention concerne également un procédé de remplissage de réservoir(s) de gaz sous pression, notamment d'hydrogène, utilisant un dispositif de remplissage conforme à l'une quelconque des caractéristiques précédentes, le procédé comprenant une étape de remplissage d'au moins réservoir selon le premier mode de transfert en réponse à la réception ou la génération d'un signal d'une demande de remplissage relativement haute ou une étape de remplissage d'au moins réservoir selon le second mode de transfert en réponse à la réception ou la génération d'un signal d'une demande de remplissage relativement basse, le transfert de gaz dans le réservoir selon le premier mode de transfert utilisant la source ayant la pression la plus élevée, le transfert de gaz dans le réservoir selon le second mode de transfert utilisant une source de gaz ayant une pression inférieure à cette pression la plus élevée.

Selon d'autres particularités possibles :
- le procédé comporte une étape de génération ou de réception d'un signal d'une demande de remplissage relativement haute de façon anticipée par rapport à ladite demande de remplissage relativement haute,
- le procédé comporte, pendant ou après ou avant le remplissage d'un réservoir, une étape de remplissage d'au moins une partie des stockage tampon à partir de gaz d'au moins une source et éventuellement via le compresseur,
- le remplissage d'au moins une partie des stockage tampon est réalisé en utilisant la source de gaz ayant la pression la plus élevée lors d'une une période de demande de remplissage relativement haute,
- le remplissage d'au moins une partie des stockage tampon est réalisé à parti d'une source ayant une pression inférieure à cette pression la plus élevée lors une période de demande de remplissage relativement basse.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence à la figure unique qui représente de façon schématique et partielle un exemple de structure et de fonctionnement de l'invention.

Le dispositif de remplissage de réservoir(s) de gaz sous pression, notamment d'hydrogène, comprend un circuit 2 comprenant une pluralité d'extrémités 3 amont raccordées respectivement à des sources 4, 5, 6 de gaz sous pression distinctes (généralement à des pression distinctes).

Les sources 4, 5, 6 peuvent comporter l'un au moins parmi : des réservoirs de gaz sous pression ou des ensembles de réservoirs de gaz sous pression (cadres) ; ces réservoirs ou ensembles de réservoirs peuvent être disposés sur des remorques mobiles (« tube trailer » en anglais), des réservoirs de liquide associés à un vaporiseur, un réseau de gaz sous pression ou toute autre source appropriée.

Le circuit 2 comprend en outre au moins un compresseur 7, de préférence de type volumétrique.

Le circuit 2 comprend en outre de préférence au moins un stockage 8, 9, 10 tampon, par exemple trois stockages tampon (stockages de gaz sous pression). Ces stockages tampon 8, 9, 10 peuvent être remplis par la ou les sources, directement (équilibrage) et/ou via le compresseur 7. De même un stockage tampon peut remplir un autre stockage (par exemple directement et/ou via le compresseur 7).

Comme illustré, le dispositif 1 peut comporter une conduite 32 de recirculation reliant la sortie du compresseur 7 à son entrée et munie d'une vanne 13. Un clapet unidirectionnel peut également être prévu. Cette conduite 32 de recirculation permet le cas échéant de contrôler le débit de sortie du compresseur 7 en contrôlant la quantité de gaz de sa sortie qui est renvoyé à son admission (entrée). De plus, un stockage tampon 8 peut être prévu sur cette ligne pour permettre son remplissage par le compresseur 7 et pour permettre également le cas échant de constituer une source de gaz pour le compresseur 7 (par exemple pour remplir les autres stockages tampon 9, 10).

Classiquement, les stockages tampon 8, 9, 10 peuvent être utilisés pour réaliser un remplissage de réservoir(s) 12 par « cascade » (équilibrages de pression successifs). Ces stockages 8, 9,10 peuvent alimenter le compresseur 12 ou suppléer le compresseur 12. C'est-à-dire que les stockages tampon peuvent transférer du gaz dans le réservoir 12 en même temps que le compresseur 7 et/ou avant et/ou après le compresseur 12.

De façon connue également, des stockages tampon 8, 9, 10 peuvent être remplis par la ou les sources 4, 5, 6 (éventuellement via le compresseur 7) pendant que d'autres stockages tampon sont utilisés pour remplir le réservoir 12.

Classiquement également, le remplissage de réservoir 12 peut être contrôlé selon une vitesse de remplissage prédéfinie et/ou en fonction de tout paramètre approprié : pression, température, densité, quantité de gaz...

Le circuit 2 comprend un ensemble de vannes 13, 14, 15, 16, de préférence pilotées et au moins une extrémité 11 aval (buse, raccord ou pistolet...) destinée à être raccordée au(x) réservoir(s) 12 à remplir. L'extrémité aval 11 est de préférence située au bout d'une conduite flexible.

Le dispositif 1 de remplissage comprenant en outre un organe 35 de commande électronique de stockage et de traitement. Cet organe 35 de commande comprend par exemple un microprocesseur, un ordinateur, un automate ou tout dispositif électronique de contrôle et de commande approprié.

L'organe 35 de commande est relié à l'ensemble de vanne 13, 14, 15,16 pour commander leur ouverture/fermeture et au(x) compresseur(s) 7 pour commander le démarrage, l'arrêt et son fonctionnement (par exemple sa vitesse ou puissance).

Classiquement, le dispositif 1 de remplissage comprend de préférence également un organe de refroidissement du gaz transféré dans le réservoir 12 à remplir (non représenté ici par soucis de simplification). Cet organe de refroidissement (par exemple un échangeur de chaleur refroidi par une source froide) est généralement disposé en aval du compresseur 7.

L'organe 35 de commande est configuré (par exemple programmé) pour commander les vannes 13, 14, 15, 16 et/ou le compresseur 7 pour assurer un transfert de gaz dans le réservoir 12 à partir d'au moins une source 4, 5, 6 et/ou d'au moins un stockage tampon 8, 9, 10 par équilibrage de pression et/ou via le compresseur 7.

En particulier, l'organe 35 de commande est configuré pour assurer un transfert de gaz dans le réservoir 12 selon un protocole prédéfini qui peut être dépendant des conditions ou de l'état du dispositif 1. Ce protocole peut prévoir la quantité et la vitesse de remplissage de gaz dans le réservoir 12. De même, ce protocole peut définir la provenance du gaz transféré dans le réservoir (source(s), stockage(s) tampon, utilisation ou non du compresseur, vitesse du compresseur...).

A cet effet, le dispositif 1 comprend de préférence un ensemble de capteurs 24, 25, 26, 28, 29, 30 de pression dans le circuit 2 mesurant la pression dans au moins une partie des sources 4, 5, 6 et/ou des stockages tampon 8, 9, 10.

De même un ensemble de capteurs 33 de température peut être prévu

L'organe 35 de commande comprend un organe 27 de réception ou de génération d'un signal représentatif de la demande de remplissage parmi au moins deux niveaux distincts de demande de remplissage : une demande relativement haute et une demande relativement basse.

De plus, l'organe 35 de commande est configuré pour assurer le transfert de gaz dans le réservoir 12 selon au moins un premier mode de transfert utilisant prioritairement (ou en premier) la source ayant la pression la plus élevée et un second mode de transfert utilisant (prioritairement ou en premier) une source ayant une pression inférieure à cette pression la plus élevée.

L'organe 35 de commande est configuré pour remplir le au moins un réservoir 12 selon le premier mode de transfert en réponse à la réception ou la génération d'un signal d'une demande de remplissage relativement haute et pour remplir le au moins un réservoir 12 selon le second mode de transfert en réponse à la réception ou la génération d'un signal d'une demande de remplissage relativement basse.

C'est-à-dire que le dispositif 1 de remplissage choisit intelligemment la source de gaz parmi plusieurs sources, soit pour augmenter les performances de remplissage du dispositif 1 pendant un laps ou une situation de temps prédéfini(e), soit pour utiliser les sources de gaz de moindre pression et/ou pour vidanger ces dernières lentement à leur pression minimum en fonction de paramètres de fonctionnement prédéfinis (performance moindre).

Les paramètres de fonctionnement peuvent comprendre l'un au moins parmi :
- les différents niveaux pression au sein des sources 4, 5, 6,
- les différents niveaux de pression au sein des stockages tampon 8, 9, 10,
- la pression du réservoir à remplir,
- la température de tout ou partie des réservoirs (sources, stockages tampon, réservoir à remplir),
- la date
- l'heure,
- le nombre de véhicules/réservoirs 12 à remplir en attente ou en provenance vers le dispositif 1 de remplissage,
- une commande extérieure (par exemple autre que d'un client/utilisateur, par exemple un dispositif de supervision, un opérateur, une intelligence artificielle, une commande manuelle) pour anticiper les futures charges de remplissage et/ou d'autres contraintes (par exemple des contraintes de logistique des sources telles que indisponibilités, grève, jours fériés, longue période d'impossibilité de centre de conditionnement...) .

Ainsi, le dispositif 1 peut être configuré pour utiliser la source 4, 5, 6 avec la plus haute pression lors de pics de consommation et/ou lors d'un ordre extérieur et/ou en fonction de la date et de l'heure et/ou du nombre de réservoirs 12 à remplir en attente ou en provenance.

Par exemple, grâce à un enregistrement régulier au niveau d'un ou plusieurs dispositifs 1 de remplissage, il est possible de prédire (prédéfinir) les moments de pics de consommation journaliers pour chacun des dispositifs 1 de remplissage.

Par exemple, par un traitement statistique de ces enregistrements pour un dispositif de remplissage, des profils de journées types peuvent être créés et implémentés dans la le dispositif 35 de commande et/ou dans son système de monitoring/contrôle distant.

De plus, par une consolidation itérative d'une journée à l'autre ou d'une semaine à l'autre ou d'une année à l'autre, ces profils de journée de charges seront de plus en plus précis et représentatifs d'une tendance (par exemple chaque lundi profil ou chaque premier samedi de vacances d'été) . Ces profils peuvent être distingués suivant au moins l'un des paramètres suivants (non exhaustifs et combinables) :
- le jour de la semaine. Par exemple, le profil d'une journée type du mardi (avec des pics de charge prononcés entre 7h et 10h puis entre 16h et 20h) peut être différent d'un profil de charge du mercredi (plus lissé tout au long de la journée, c'est-à-dire avec des pics de charges mon important et plus étalés dans le temps),
- les jours fériés ou la veille de jours fériés. Les jours fériés sont des jours propices au long déplacement. Ainsi une importante charge sera imposée aux dispositifs 1 de remplissage tout au long de la journée. Ainsi les profils d'utilisation d'un dispositif seront plus chargés en matinée que lors d'une journée normale et même qu'une journée de weekend,
- la météo (par exemple un jour pluvieux pourra être moins chargé qu'un jour ensoleillé),
- en fonction de la région ou de l'emplacement du dispositif 1 de remplissage.

Ainsi, grâce à ces profils types de journées, le programme mis en oeuvre par l'organe 35 de commande et pilotant le dispositif 1 de remplissage et/ou sa supervision peuvent anticiper les moments de charges importantes et ainsi choisir d'augmenter ses performances (premier mode de transfert) durant un certain temps fixé et paramétré (par exemple une heure) avant la montée en charge du taux d'utilisation de cette dernière (supposé par les profils type) . Par exemple, une heure avant le moment de pic de charge, le dispositif 35 de commande change automatiquement sa source de pression pour le transfert de gaz, en choisissant la source 4, 5, 6 à la plus haute pression. Ceci peut être réalisé en pilotant les vannes appropriées. Ceci commute le dispositif 1 de remplissage dans un mode de performance optimal/maximal pour fonctionner à plein régime. Le dispositif 1 de remplissage pourra être rechargé plus rapidement et sera disponible à 100% lorsque les utilisateurs arriveront en grand nombre.

Ainsi, grâce à cette particularité, le dispositif 1 de remplissage, une fois rechargé à son maximum (stockages tampon pleins et/ou niveau de froid atteint du dispositif de refroidissement) et avec des performances optimums, peut remplir le maximum de véhicule/réservoirs 12 en diminuant les temps d'attente entre chaque remplissage. En effet, le temps d'attente entre chaque remplissage correspond généralement au temps de rechargement interne de la station 1 pour re-pressuriser les stockages tampon 8, 9, 10 utilisés lors du remplissage précédent.

Ceci permet en outre de maximiser les taux de remplissage des clients grâce aux profils de charge et ainsi grâce à un planning de charge préétabli ou, plus simplement, suivant une heure préétablie.

Inversement, grâce à ces profils de charges/demande en fonction de journées types (ou semaine ou jour de l'année), le dispositif 1 de remplissage peut déterminer automatiquement quand il doit ne pas utiliser la source de pression la plus haute, pour se connecter à une source ayant une pression plus basse. Ainsi le régime de fonctionnement du dispositif 1 de remplissage est réduit. L'intérêt/avantage est de réduire le débit du compresseur.

Ceci permet de diminuer la consommation électrique de compresseur 7. En effet, pour une même pression source alimentant l'entrée du compresseur, si le compresseur 7 a un débit divisé par deux (en ralentissant la vitesse du moteur du compresseur 7 par exemple) sa puissance électrique consommée (en une heure par exemple) se retrouve divisée par deux. Ainsi, un compresseur consommant 100 kW par heure à pleine puissance, voit sa consommation diminuer à 50 kW consommé par heure pour un débit divisé par deux. Cela permet de lisser les pics de consommation électrique.

La réduction de la vitesse de compression du compresseur 7 permet également de réduire les échauffements indésirables. En effet, lors de l'échauffement du gaz dans le cylindre pendant la phase de compression (cas d'un compresseur à piston), l'échange thermique avec le système de refroidissement du compresseur 7 est plus efficace car le temps d'échange thermique est plus long. Ceci permet de diminuer l'échauffement des pièces d'usure du compresseur 7 (comme les segments d'étanchéité, les membranes, les clapets d'aspiration ou les clapets de refoulement).

Ceci diminue également la demande énergétique du groupe froid qui refroidit ces parties chaudes (échangeurs, cylindre, etc.) . La solution décrite permet de diminuer les coûts de maintenance (car les pièces d'usures s'échauffent moins et donc s'usent moins vite) d'environ 20% et aussi de diminuer les coûts de consommations électriques demandés par le système de refroidissement d'environ 20%.

En réduisant la vitesse de compression du compresseur 7, on permet également au compresseur 7 de fonctionner plus longtemps dans un régime stable. Ceci permet notamment de diminuer le nombre d'arrêts et démarrages pour un même nombre de remplissages successifs ou au cours d'un remplissage. En effet, si le compresseur 7 fonctionne à plein régime et qu'un véhicule arrive toutes les 5 minutes et que le compresseur 7 a besoin par exemple de 3 minutes pour re-pressuriser les stockages tampn 8, 9, 10 pour préparer le prochain remplissage, le compresseur 7 s'arrêtera et redémarrera entre chaque plein de réservoir à remplir. Au contraire, si le même compresseur 7, par exemple, pendant une période de faible affluence, fonctionne à 50% de ses performances, ce dernier ne s'arrêtera pas entre chaque remplissage de réservoir 12. Ceci limite encore les demandes de consommation électrique en pics à chaque démarrage.

En diminuant le nombre d'arrêts et de démarrages du compresseur 7, cela diminue également les phases ou le compresseur 7 refroidit. Ainsi les pièces d'usure (tel que les segments d'étanchéité, les membranes, les clapets...) ne subiront pas ou moins de variations thermiques importantes. Ces pièces d'usures sont généralement dimensionnées pour une utilisation aux conditions stables de fonctionnement tel que la pression du procédé (500 bar ou 1000 bar) et la température de fonctionnement (entre 100 et 250 degrés Celsius par exemple). Lors d'une phase de démarrage, les chocs mécaniques et les niveaux de contraintes et les niveaux de dilatations sont différents. Tous ces paramètres détériorent fortement ces pièces lors des phases de démarrage. Ainsi, diminuer le nombre de démarrages/arrêts grâce à la solution décrite permet de diminuer le niveau d'usure et par conséquent de diminuer les interventions humaines pour réaliser une maintenance et un changement des pièces. Donc des économies financières d'opérations des stations sont réalisées.

Le fait de commander une diminution des performances du dispositif 1 de remplissage (second mode de transfert de gaz pendant une demande de remplissage relativement basse) permet d'utiliser le compresseur 7 dans d'autres configurations. En effet, le débit d'un compresseur 7 volumétrique est proportionnel à sa pression d'aspiration. Prenons par exemple un compresseur ayant un débit de 100 Nm3/h lorsqu'il a une pression source de 200 bar. Si sa pression d'aspiration diminue à 50 bar, son débit diminuera environ jusqu'à environ 25 Nm3/h. Donc, pour qu'un dispositif 1 de remplissage ait sa performance à son maximum, la source doit être à la pression maximum. Cela signifie qu'en pleine journée ou lors de pics de charge, la solution de pilotage (organe 35) commandera l'utilisation de la pression source la plus haute.

Inversement, lorsque le dispositif n'est pas fortement sollicité (demande de remplissage relativement basse), le dispositif peut se permettre d'utiliser des sources 4, 5, 6 avec une pression plus basse.

Ainsi, en pleine journée (demande de remplissage relativement haute), il peut être déconseillé d'utiliser une source 4, 5, 6 à une pression plus basse sous peine de ne pas parvenir à répondre à la demande de remplissage. Ceci permet de maximiser l'utilisation d'une source 4, 5, 6 jusqu'à sa capacité/pression la plus basse. Ainsi, les coûts d'opération sont diminués car ces derniers incluent dans le coût de la source 4, 5, 6, le coût du transport et le coût de la quantité de gaz non utilisée. En effet, si par exemple une source 4, 5, 6 (initialement à 200 bar) repart au centre de conditionnement avec une pression interne de 50 bar au lieu de 30 bar, cela signifie qu'environ 10% de la capacité utilisable n'a pas été utilisé. Donc 10% du prix d'achat de molécules est non utilisé et se retrouve répercuté sur les coûts d'exploitations en tant que manque à gagner.

De même, sur ce même exemple, concernant le coût du transport du gaz, pour 100kg transporté pour un coût de transport de 100€ ; si une source repart avec une pression à 50bar, le coût de transport se répercute à 100€ pour 75 kg (1,33 € par kg par exemple). Si la source repart à une pression de 30 bar, le coût de transport se répercute à 100€ pour 85 kg (1,177 € /kg).

Ceci montre l'intérêt économique d'utiliser la pression source au plus bas possible lors des périodes de faible demande de remplissage (pour optimiser les coûts de transport et les coûts de quantité payé mais non utilisée). L'invention permet ainsi de vider ces sources 4, 5, 6 (par exemple « trailers » ou portions de trailers ou « cadres ») au maximum non pas pendant la journée ou pendant les pics d'utilisation mais de manière intelligente lorsque le dispositif 1 de remplissage n'est pas utilisé (par exemple la nuit, pendant des créneaux prédéfinis ou pendant une anticipation d'absence de demande client grâce aux profils de charge mentionnés précédemment).

Ainsi, selon une particularité avantageuse, la ou les sources avec la plus haute pression sont utilisée prioritairement lors (ou juste avant) de pics de consommation ou lors d'un ordre extérieur en fonction du nombre de voitures en attente par exemple.

Le dispositif 1 de remplissage peut comporter, un système 27 de détection du nombre de voitures présents au sein du dispositif 1 ou y arrivant. Ce système peut comporter par exemple au moins l'un parmi : une caméra, un capteur de passage, un système d'identification, un système de géolocalisation de véhicule(s), un système de détection de passage à l'entrée (laser ou pression ou autres...).

De préférence ce système permet d'identifier une demande de remplissage importante, même si ce pic n'était pas prévu. Le dispositif 1 de remplissage (organe 15 par exemple), reçoit ainsi ou génère un signal de passage de demande de remplissage relativement haute (et inversement pour respectivement une demande de remplissage relativement basse).

Le dispositif 1 commute alors en mode de transfert approprié (premier ou respectivement second mode de transfert) : pour utiliser la source 4, 5, 6 de gaz ayant la pression la plus haute (ou respectivement plus basse).

Avantageusement, le dispositif peut comporter un système 31 de détection du nombre de voitures en provenance vers le dispositif 1 de remplissage. Ce système peut comporter un appareil de géolocalisation ou un système externe de réservation d'un créneau de passage ou un système reliée au GPS (système de navigation ou autre) du véhicule se dirigeant vers le dispositif 1 de remplissage). Ce système 31 permet d'identifier une demande client importante, même si ce pic n'était pas prévu. Le dispositif 1 sait ainsi qu'il faut commuter dans le premier mode de transfert (plein régime avec utilisation de la source de gaz ayant la pression la plus élevée) ou second mode de transfert (régime inférieur au plein régime utilisant une source de gaz ayant une pression inférieure à la source de gaz la plus pressurisée).

La solution peut permettre également le cas échéant d'utiliser les sources 4, 5, 6 ayant une pression relativement plus basse pour optimiser et planifier les rotations et livraison de gaz source ou le changement de source (source pleine contre source vide).

Le dispositif 1 de remplissage peut donc permettre de réduire intelligemment ses performances au moment opportun (second mode de transfert lors d'une demande de remplissage relativement basse) ou d'augmenter ses performances lors de pic de demande utilisateur (premier mode de transfert lors d'une demande de remplissage relativement haute).

De plus le dispositif 1 permet également d'anticiper les demandes des clients et ainsi de se préparer au moment de (re)charge futur.

Ainsi, le dispositif peut utiliser ces informations de demande de remplissage pour planifier les moments optimums pour changer les sources 4, 5, 6.

De préférence, les sources 4, 5, 6 sont remplacées ou remplies lorsqu'elles sont à la plus basse pression possible et lorsque les centres de distributions/remplissage sont disponibles. Le dispositif 1 de remplissage pourra aussi anticiper les jours fériés ou dimanche (où la circulation est limitée voire interdite dans certaines régions) en commandant automatiquement des sources 4, 5, 6 pleines à l'avance.

En vidant les sources 4, 5, 6 pendant la nuit (pour remplir les stockages tampon 8, 9, 10 par exemple), le dispositif 1 de remplissage peut calculer quelle sera la pression des sources 4, 5, 6 le matin ou après un temps prédéfini. Le dispositif 1 de remplissage (organe 35 de commande par exemple) peut par exemple envoyer un signal pour commander des sources 4, 5, 6 le lendemain matin ou pendant un moment optimum (avant un pic de charge attendu ou pendant un creux de charge défini par les profils de charges mentionnés précédemment).

Ceci peut être anticipé plusieurs jours à l'avance grâce aux profils de jours, en combinant, l'optimisation des performances et la planification des livraisons, cette commande peut être anticipée et planifiée. Ceci évite ainsi de commander des sources 4, 5, 6 de gaz en urgence et de faire face à des indisponibilités des fournisseurs.

Dans l'exemple de la figure 1 décrit ci-dessus, le dispositif 1 de remplissage peut être une station-service. Bien entendu, l'invention n'est pas limitée à cet exemple de réalisation. Ainsi, tout ou partie des caractéristiques ci-dessus peuvent être mises en oeuvre directement par une ou plusieurs remorques (« trailer » ou « tube trailer ») transportant plusieurs conteneurs de gaz sous pression. La remorque peut ainsi comporter plusieurs compartiments (plusieurs conteneurs ou plusieurs ensembles de conteneurs de gaz sous pression) et un ensemble de vannes approprié (notamment des vannes pneumatiques). Dans ce cas les différentes sources sont constituées par les différents compartiments. La commande des vannes permet d'utiliser comme source un compartiment ou une autre. Ainsi, le transfert de gaz par « cascade » n'est pas réalisé entre différent trailers (différentes sources comme illustré à la figures 1) mais entre les différentes sources qui sont des parties distinctes d'un même « trailer » (ou remorque).

La commande d'ouverture/fermeture des vannes peut être pilotée par une station et/ou une logique électronique sur la remorque et/ou par un organe de commande distant.

## Revendications

1. Dispositif de remplissage de réservoir(s) de gaz sous pression, notamment d'hydrogène, comprenant un circuit (2) comprenant une pluralité d'extrémités (3) amont raccordées respectivement à des sources (4, 5, 6) de gaz sous pression distinctes, le circuit (2) comprenant en outre au moins un compresseur (7), au moins un stockage (8, 9, 10) tampon, un ensemble de vannes (13, 14, 15, 16) pilotées et au moins une extrémité (11) aval destinée à être raccordée au réservoir (s) (12) à remplir, le dispositif (1) comprenant en outre un organe (35) de commande électronique de stockage et de traitement relié à l'ensemble de vanne (13, 14, 15,16) et au compresseur(s) (7), l'organe (35) de commande étant configuré pour commander les vannes (13, 14, 15, 16) et/ou le compresseur (7) pour assurer un transfert de gaz dans le réservoir (12) à partir d'au moins une source (4, 5, 6) et/ou d'au moins un stockage tampon (8, 9, 10) par équilibrage de pression et/ou via le compresseur (7), le dispositif (1) comprenant un ensemble de capteurs (24, 25, 26, 28, 29, 30) de mesure de la pression au sein des sources (4, 5, 6) et des stockages tampon (8, 9, 10), l'organe (35) de commande comprenant un organe (27) de réception ou de génération d'un signal représentatif de la demande de remplissage parmi au moins deux niveaux distincts de demande de remplissage : une demande relativement haute et une demande relativement basse, l'organe (35) de commande étant configuré pour assurer le transfert de gaz dans le réservoir (12) selon au moins un premier mode de transfert utilisant la source ayant la pression la plus élevée et un second mode de transfert utilisant une source ayant une pression inférieure à cette pression la plus élevée, l'organe (35) de commande étant configuré pour remplir le au moins un réservoir (12) selon le premier mode de transfert en réponse à la réception ou la génération d'un signal d'une demande de remplissage relativement haute et pour remplir le au moins un réservoir (8) selon le second mode de transfert en réponse à la réception ou la génération d'un signal d'une demande de remplissage relativement basse **caractérisé en ce que** l'organe (27) de réception ou de génération d'un signal représentatif de la demande de remplissage comprend un agenda et une horloge électroniques, l'organe (35) de commande stockant un calendrier prédéfini définissant des périodes de demande relativement haute ou relativement basse en fonction du jour et de l'heure définis par l'agenda et l'horloge, et **en ce que** le calendrier prédéfini est mis à jour et le cas échéant modifié en fonction des données réelles de demande de remplissage en terme de quantité et de dates et heures, c'est-à-dire que le calendrier est éventuellement modifié de façon itérative et prédictive en fonction des données passées enregistrées, et/ou le calendrier prédéfini est mis à jour en fonction de données externes parmi : une information de météo (ensoleillé/pluvieux), la température atmosphérique.

2. Dispositif selon la revendication 1, **caractérisé en ce que** l'organe (27) de réception ou de génération d'un signal représentatif de la demande de remplissage comprend un détecteur (27) de véhicule dans une zone du dispositif ou dans une zone d'approche du dispositif (1), l'organe (35) de commande étant configuré pour définir une demande relativement haute ou relativement basse selon que le nombre de véhicules détectés dans la zone du dispositif et/ou approchant le dispositif est supérieur ou inférieur à un nombre seuil prédéfini.

3. dispositif selon l'une des revendications 1 ou 2, **caractérisé en ce que** l'organe (27) de réception ou de génération d'un signal représentatif de la demande de remplissage comprend un récepteur sans fil ou filaire configuré pour recevoir un signal de commutation du mode de transfert de gaz dans le premier mode de transfert ou dans le second mode de transfert.

4. Dispositif selon l'une quelconque des revendications 1 à 3, **caractérisé en ce que** dans le premier mode de transfert le transfert de gaz utilise une ou des sources de gaz ayant la pression la plus élevée et comprise entre 400 et 800bar tandis que dans le second mode de transfert utilise ou des sources de gaz ayant une pression inférieure à cette pression la plus élevée et comprise entre 50 et 400 bar.

5. Dispositif selon l'une quelconque des revendications 1 à 4, **caractérisé en ce que** selon le second mode de transfert, les remplissages successifs de plusieurs réservoirs (12) nécessitent un nombre d'arrêts et de redémarrages de compresseur (7) qui est réduit par rapport au nombres d'arrêts et de redémarrages nécessaires pour remplir le même nombre de réservoirs selon le premier mode de transfert.

6. Dispositif selon l'une quelconque des revendications 1 à 5, **caractérisé en ce que** chaque source (4, 5, 6) comprend au moins l'un parmi : un réservoir de gaz sous pression, tout ou partie d'un ensemble de réservoirs de gaz sous pression sur des remorques, un réservoir de gaz liquéfié associé à un vaporiseur, un réseau de gaz sous pression.

7. Dispositif selon l'une quelconque des revendications 1 à 6, **caractérisé en ce que** le compresseur (7) est du type électrique, ou, respectivement le compresseur (7) est du type à rotation ou à translation d'un élément de compression à une vitesse déterminée et **en ce que** lors du second mode de transfert la puissance électrique du compresseur (7) est comprise entre 80% et 25% et de préférence entre 30 et 60% de la puissance électrique du compresseur (7) lors du premier mode, ou, respectivement, lors du second mode de transfert la vitesse de l'élément de compression du compresseur (7) est comprise entre 80% et 25% et de préférence entre 30 et 60% de la vitesse de l'élément de compression lors du premier mode de transfert.

8. Procédé de remplissage de réservoir (s) de gaz sous pression, notamment d'hydrogène, utilisant un dispositif de remplissage conforme à l'une quelconque des revendications précédentes, le procédé comprenant une étape de remplissage d'au moins réservoir (12) selon le premier mode de transfert en réponse à la réception ou la génération d'un signal d'une demande de remplissage relativement haute ou une étape de remplissage d'au moins réservoir (12) selon le second mode de transfert en réponse à la réception ou la génération d'un signal d'une demande de remplissage relativement basse, le transfert de gaz dans le réservoir (12) selon le premier mode de transfert utilisant la source ayant la pression de la station ayant la pression la plus élevée, le transfert de gaz dans le réservoir (12) selon le second mode de transfert utilisant une source de gaz ayant une pression inférieure à cette pression la plus élevée.

9. Procédé de remplissage selon la revendication 8, **caractérisé en ce qu'**il comporte une étape de génération ou de réception d'un signal d'une demande de remplissage relativement haute de façon anticipée par rapport à ladite demande de remplissage relativement haute.

10. Procédé de remplissage selon la revendication 9, **caractérisé en ce qu'**il comporte, pendant ou après ou avant le remplissage d'un réservoir (12), une étape de remplissage d'au moins une partie des stockage tampon (8, 9, 10) à partir de gaz d'au moins une source (4, 5, 6) et éventuellement via le compresseur (7).

11. Procédé de remplissage selon la revendication 10, **caractérisé en ce que** le remplissage d'au moins une partie des stockage tampon (8, 9, 10) est réalisé en utilisant la source de gaz ayant la pression la plus élevée lors d'une une période de demande de remplissage relativement haute.

12. Procédé de remplissage selon la revendication 9 ou 10, **caractérisé en ce que** le remplissage d'au moins une partie des stockage tampon (8, 9, 10) est réalisé à parti d'une source ayant une pression inférieure à cette pression la plus élevée lors une période de demande de remplissage relativement basse.

## Patentansprüche

1. Vorrichtung zum Befüllen von einem oder mehreren Tanks mit Druckgas, insbesondere Wasserstoff, beinhaltend einen Kreislauf (2), der eine Vielzahl von stromaufwärtigen Enden (3) beinhaltet, die jeweils an unterschiedliche Druckgasquellen (4, 5, 6) angeschlossen sind, wobei der Kreislauf (2) ferner mindestens einen Kompressor (7), mindestens einen Zwischenspeicher (8, 9, 10), einen Satz angesteuerter Ventile (13, 14, 15, 16) und mindestens ein stromabwärtiges Ende (11), das dazu bestimmt ist, an den einen oder die mehreren zu befüllenden Tanks (12) angeschlossen zu werden, beinhaltet, wobei die Vorrichtung (1) ferner ein elektronisches Steuerorgan (35) zur Speicherung und Verarbeitung beinhaltet, das mit dem Satz Ventile (13, 14, 15, 16) und dem einen oder den mehreren Kompressoren (7) verbunden ist, wobei das Steuerorgan (35) dazu konfiguriert ist, die Ventile (13, 14, 15, 16) und/oder den Kompressor (7) zu steuern, um einen Transfer von Gas in den Tank (12) von mindestens einer Quelle (4, 5, 6) und/oder von mindestens einem Zwischenspeicher (8, 9, 10) aus durch Druckausgleich und/oder mittels des Kompressors (7) sicherzustellen, wobei die Vorrichtung (1) einen Satz Sensoren (24, 25, 26, 28, 29, 30) zum Messen des Drucks innerhalb der Quellen (4, 5, 6) und der Zwischenspeicher (8, 9, 10) beinhaltet, wobei das Steuerorgan (35) ein Organ (27) für den Empfang oder die Erzeugung eines Signals beinhaltet, das für die Befüllungsnachfrage innerhalb von zwei unterschiedlichen Befüllungsnachfrageniveaus repräsentativ ist: einer relativ hohen Nachfrage und einer relativ niedrigen Nachfrage, wobei das Steuerorgan (35) dazu konfiguriert ist, den Transfer von Gas in den Tank (12) gemäß mindestens einem ersten Transfermodus, der die Quelle verwendet, die den höchsten Druck aufweist, und einem zweiten Transfermodus, der eine Quelle verwendet, die einen kleineren Druck als diesen höchsten Druck aufweist, sicherzustellen, wobei das Steuerorgan (35) dazu konfiguriert ist, den mindestens einen Tank (12) als Reaktion auf den Empfang oder die Erzeugung eines Signals einer relativ hohen Befüllungsnachfrage gemäß dem ersten Transfermodus zu befüllen und den mindestens einen Tank (8) als Reaktion auf den Empfang oder die Erzeugung eines Signals einer relativ niedrigen Befüllungsnachfrage gemäß dem zweiten Transfermodus zu befüllen, **dadurch gekennzeichnet, dass** das Organ (27) für den Empfang oder die Erzeugung eines Signals, das für die Befüllungsnachfrage repräsentativ ist, einen elektronischen Kalender und eine elektronische Uhr beinhaltet, wobei das Steuerorgan (35) einen vordefinierten Zeitplan speichert, der Perioden mit relativ hoher oder relativ niedriger Nachfrage in Abhängigkeit von dem Tag und der Uhrzeit, die durch den Kalender und die Uhr definiert werden, definiert, und dass der vordefinierte Zeitplan in Abhängigkeit von den tatsächlichen Befüllungsnachfragedaten bezüglich Menge und Datum und Uhrzeit aktualisiert und ggf. modifiziert wird, das heißt, dass der Zeitplan eventuell in Abhängigkeit von den aufgezeichneten vergangenen Daten iterativ und prädiktiv modifiziert wird und/oder der vordefinierte Zeitplan in Abhängigkeit von externen Daten aus Folgenden: einer Wetterinformation (sonnig/regnerisch), der Lufttemperatur, aktualisiert wird.

2. Vorrichtung nach Anspruch 1, **dadurch gekennzeichnet, dass** das Organ (27) für den Empfang oder die Erzeugung eines Signals, das für die Befüllungsnachfrage repräsentativ ist, einen Detektor (27) für Fahrzeuge in einem Bereich der Vorrichtung oder in einem Annäherungsbereich der Vorrichtung (1) beinhaltet, wobei das Steuerorgan (35) dazu konfiguriert ist, eine relativ hohe oder relativ niedrige Nachfrage danach zu definieren, ob die Anzahl von Fahrzeugen, die in dem Bereich der Vorrichtung detektiert werden und/oder sich der Vorrichtung nähern, größer oder kleiner als eine vordefinierte Schwellenanzahl ist.

3. Vorrichtung nach einem der Ansprüche 1 oder 2, **dadurch gekennzeichnet, dass** das Organ (27) für den Empfang oder die Erzeugung eines Signals, das für die Befüllungsnachfrage repräsentativ ist, einen drahtlosen oder drahtgebundenen Empfänger beinhaltet, der dazu konfiguriert ist, ein Signal zum Umschalten des Gastransfermodus in den ersten Transfermodus oder in den zweiten Transfermodus zu empfangen.

4. Vorrichtung nach einem beliebigen der Ansprüche 1 bis 3, **dadurch gekennzeichnet, dass** in dem ersten Transfermodus der Gastransfer eine oder mehrere Gasquellen verwendet, die den höchsten Druck aufweisen, der zwischen 400 und 800 bar beträgt, während er in dem zweiten Transfermodus eine oder mehrere Gasquellen verwendet, die einen kleineren Druck als diesen höchsten Druck aufweisen, der zwischen 50 und 400 bar beträgt.

5. Vorrichtung nach einem beliebigen der Ansprüche 1 bis 4, **dadurch gekennzeichnet, dass** gemäß dem zweiten Transfermodus die aufeinanderfolgenden Befüllungen mehrerer Tanks (12) eine Anzahl von Stopps und Neustarts des Kompressors (7) benötigen, die bezogen auf die Anzahl von Stopps und Neustarts, die zum Befüllen derselben Anzahl von Tanks gemäß dem ersten Transfermodus notwendig ist, kleiner ist.

6. Vorrichtung nach einem beliebigen der Ansprüche 1 bis 5, **dadurch gekennzeichnet, dass** jede Quelle (4, 5, 6) mindestens eines von Folgendem beinhaltet: einen Druckgastank, alle oder einen Teil eines Satzes Druckgastanks auf Anhängern, einen Flüssiggastank, der mit einem Verdampfer assoziiert ist, ein Druckgasnetz.

7. Vorrichtung nach einem beliebigen der Ansprüche 1 bis 6, **dadurch gekennzeichnet, dass** der Kompressor (7) vom elektrischen Typ ist bzw. der Kompressor (7) vom Typ Rotation oder Translation eines Kompressionselements mit einer bestimmten Geschwindigkeit ist und dass während des zweiten Transfermodus die elektrische Leistung des Kompressors (7) zwischen 80 % und 25 % und vorzugsweise zwischen 30 % und 60 % der elektrischen Leistung des Kompressors (7) während des ersten Modus beträgt bzw. während des zweiten Transfermodus die Geschwindigkeit des Kompressionselements des Kompressors (7) zwischen 80 % und 25 % und vorzugsweise zwischen 30 % und 60 % der Geschwindigkeit des Kompressionselements während des ersten Transfermodus beträgt.

8. Verfahren zum Befüllen von einem oder mehreren Tanks mit Druckgas, insbesondere Wasserstoff, unter Verwendung einer Befüllungsvorrichtung gemäß einem beliebigen der vorhergehenden Ansprüche, wobei das Verfahren einen Schritt des Befüllens mindestens eines Tanks (12) gemäß dem ersten Transfermodus als Reaktion auf den Empfang oder die Erzeugung eines Signals einer relativ hohen Befüllungsnachfrage oder einen Schritt des Befüllens mindestens eines Tanks (12) gemäß dem zweiten Transfermodus als Reaktion auf den Empfang oder die Erzeugung eines Signals einer relativ niedrigen Befüllungsnachfrage beinhaltet, wobei der Transfer von Gas in den Tank (12) gemäß dem ersten Transfermodus die Quelle verwendet, die den Druck der Station aufweist, die den höchsten Druck aufweist, wobei der Transfer von Gas in den Tank (12) gemäß dem zweiten Transfermodus eine Gasquelle verwendet, die einen kleineren Druck als diesen höchsten Druck aufweist.

9. Befüllungsverfahren nach Anspruch 8, **dadurch gekennzeichnet, dass** es einen Schritt des Erzeugens oder des Empfangens eines Signals einer relativ hohen Befüllungsnachfrage umfasst, der mit Bezug auf die relativ hohe Befüllungsnachfrage vorzeitig stattfindet.

10. Befüllungsverfahren nach Anspruch 9, **dadurch gekennzeichnet, dass** es während oder nach oder vor dem Befüllen eines Tanks (12) einen Schritt des Befüllens mindestens eines Teils der Zwischenspeicher (8, 9 ,10) mit Gas aus mindestens einer Quelle (4, 5, 6) und eventuell mittels des Kompressors (7) umfasst.

11. Befüllungsverfahren nach Anspruch 10, **dadurch gekennzeichnet, dass** das Befüllen mindestens eines Teils der Zwischenspeicher (8, 9, 10) während einer Periode mit relativ hoher Befüllungsnachfrage unter Verwendung der Gasquelle durchgeführt wird, die den höchsten Druck aufweist.

12. Befüllungsverfahren nach Anspruch 9 oder 10, **dadurch gekennzeichnet, dass** das Befüllen mindestens eines Teils der Zwischenspeicher (8, 9, 10) während einer Periode mit relativ niedriger Befüllungsnachfrage von einer Quelle aus durchgeführt wird, die einen kleineren Druck als diesen höchsten Druck aufweist.

## Claims

1. Device for filling a tank or tanks with pressurized gas, notably with hydrogen, comprising a circuit (2) comprising a plurality of upstream ends (3) which are respectively connected to distinct sources (4, 5, 6) of pressurized gas, the circuit (2) further comprising at least one compressor (7), at least one buffer storage device (8, 9, 10), a set of operated valves (13, 14, 15, 16) and at least one downstream end (11) intended to be connected to the tank or tanks (12) to be filled, the device (1) further comprising an electronic storage and processing control member (35) connected to the set of valves (13, 14, 15, 16) and to the compressor(s) (7), the control member (35) being configured to command the valves (13, 14, 15, 16) and/or the compressor (7) in order to ensure the transfer of gas into the tank (12) from at least one source (4, 5, 6) and/or from at least one buffer storage device (8, 9, 10) by equalizing pressures and/or using the compressor (7), the device (1) comprising a set of sensors (24, 25, 26, 28, 29, 30) for measuring the pressure within the sources (4, 5, 6) and the buffer storage devices (8, 9, 10), the control member (35) comprising a member (27) for receiving or generating a signal representative of the demand for filling from among at least two distinct filling-demand levels: a relatively high demand and a relatively low demand, the control member (35) being configured to ensure that gas is transferred into the tank (12) using at least a first mode of transfer employing the source at the highest pressure and a second mode of transfer employing a source at a pressure lower than this highest pressure, the control member (35) being configured to fill the at least one tank (12) using the first mode of transfer in response to the receipt or generation of a signal indicative of a relatively high demand for filling, and to fill the at least one tank (8) using the second mode of transfer in response to the receipt or generation of a signal indicative of a relatively low demand for filling, **characterized in that** the member (27) for receiving or generating a signal indicative of the demand for filling comprises an electronic agenda and an electronic clock, the control member (35) storing a predefined calendar defining periods of relatively high or relatively low demand according to the day and time which are defined by the agenda and the clock, and **in that** the predefined calendar is updated and, where appropriate, modified, according to actual filling-demand data regarding quantity and dates and times, which is to say that the calendar is, where appropriate, modified iteratively and predictively as a function of logged past data, and/or the predefined calendar is updated as a function of external data including: meteorological data (sunny/rainy), atmospheric temperature.

2. Device according to Claim 1, **characterized in that** the member (27) for receiving or generating a signal indicative of the demand for filling comprises a detector (27) for detecting a vehicle in a zone of the device or in an approach zone of the device (1), the control member (35) being configured to define a relatively high or relatively low demand according to whether the number of vehicles detected in the zone of the device and/or approaching the device is above or below a predefined threshold number.

3. Device according to one of Claims 1 or 2, **characterized in that** the member (27) for receiving or generating a signal indicative of the demand for filling comprises a wireless or wired receiver configured to receive a signal to switch the mode of transfer of gas to the first mode of transfer or to the second mode of transfer.

4. Device according to any one of Claims 1 to 3, **characterized in that** in the first mode of transfer, the transfer of gas employs one or more sources of gas at the highest pressure comprised between 400 and 800 bar, whereas in the second mode of transfer it employs one or more sources of gas at a pressure lower than this highest pressure and comprised between 50 and 400 bar.

5. Device according to any one of Claims 1 to 4, **characterized in that** in the second mode of transfer, the successive fillings of several tanks (12) require a number of stops and restarts of the compressor (7) which is lower in comparison with the number of stops and restarts needed to fill the same number of tanks in the first mode of transfer.

6. Device according to any one of Claims 1 to 5, **characterized in that** each source (4, 5, 6) comprises at least one of: a tank of pressurized gas, all or part of a set of tanks of pressurized gas on trailers, a tank of liquefied gas combined with a vaporizer, a pressurized-gas network.

7. Device according to any one of Claims 1 to 6, **characterized in that** the compressor (7) is of the electrical type or, respectively, the compressor (7) is of the type involving the rotational or translational movement of a compression element at a determined speed, and **in that**, in the second mode of transfer, the electrical power of the compressor (7) is comprised between 80% and 25% and preferably between 30 and 60% of the electrical power of the compressor (7) in the first mode, or, respectively, in the second mode of transfer, the speed of the compression element of the compressor (7) is comprised between 80% and 25% and preferably between 30 and 60% of the speed of the compression element in the first mode of transfer.

8. Method for filling a tank or tanks with pressurized gas, notably with hydrogen, using a filling device according to any one of the preceding claims, the method comprising a step of filling at least one tank (12) using the first mode of transfer in response to the receipt or generation of a signal indicating a relatively high demand for filling, or a step of filling at least one tank (12) using the second mode of transfer in response to the receipt or generation of a signal indicating a relatively low demand for filling, the transfer of gas into the tank (12) using the first mode of transfer employing the source at the pressure of the station at the highest pressure, the transfer of gas into the tank (12) using the second mode of transfer employing a source of gas at a pressure lower than this highest pressure.

9. Filling method according to Claim 8, **characterized in that** it comprises a step of generating or receiving a signal indicative of a relatively high demand for filling in anticipation of said relatively high demand for filling.

10. Filling method according to Claim 9, **characterized in that** it comprises, during or after or before the filling of a tank (12), a step of filling at least part of the buffer storage devices (8, 9, 10) with gas from at least one source (4, 5, 6) and possibly using the compressor (7).

11. Filling method according to Claim 10, **characterized in that** the filling of at least part of the buffer storage devices (8, 9, 10) is performed using the source of gas at the highest pressure during a period of relatively high demand for filling.

12. Filling method according to Claim 9 or 10, **characterized in that** the filling of at least part of the buffer storage devices (8, 9, 10) is performed from a source at a pressure lower than this highest pressure during a period of relatively low demand for filling.
